# EUROPEAN PATENT APPLICATION

(11) **EP 4 488 843 A1**
(43) Date of publication of application: **08.01.2025**
(21) Application number: 24185149.2
(22) Date of filing: 27.06.2024
(51) Int. Cl.: G06F 16/2453

(54) **DATABASE-BASED DATA PROCESSING METHOD, DEVICE, MEDIUM AND APPARATUS**

(30) Priority: 04.07.2023 CN 202310816542
(71) Applicant: DOUYIN VISION CO., LTD., Beijing 100041 (CN); Lemon Inc., Grand Cayman, KY1-1205 (KY)
(72) Inventor: FAN, Liya, Beijing, 100028 (CN); ZHOU, Dongyan, Beijing, 100028 (CN); CAO, Jianhua, Beijing, 100028 (CN); WANG, Dongwei, Beijing, 100028 (CN); CHEN, Heng, Beijing, 100028 (CN); SHI, Rui, Beijing, 100028 (CN); CHEN, Jianjun, Los Angeles, 90066 (US)
(74) Representative: Dentons UK and Middle East LLP

(57) **Abstract**

The present disclosure relates to a database-based data processing method, device, medium, and apparatus, the method including: receiving a target query statement; determining a corresponding target materialized view for executing the target query statement according to a data query time corresponding to the target query statement and a time granularity of the materialized view in a database, wherein the database is constructed with the materialized view at different time granularities; rewriting the target query statement according to the time granularity of the target materialized view to obtain a plurality of target sub-query statements, wherein the target sub-query statements include sub-query statements which are queried based on the target materialized view; and merging the target sub-query statements, and performing a data query according to a query statement obtained by merging.

## Description

### TECHNICAL FIELD

The present disclosure relates to the field of computer technology, and in particular, to a database-based data processing method, device, medium, and apparatus.

### BACKGROUND ART

Real-time database often has a stringent requirement on the timeliness of calculations. Therefore, common real-time database improves calculation performance through various pre-aggregation technologies and reduces query delay. Many real-time databases involve analysis of data over a window of time. The time window boundary can be any time point, usually changes continuously according to specific service requirements, and cannot be predicted in advance, and data query of a longer time window, which contains a large amount of data.

### SUMMARY OF THE INVENTION

This summary is provided to introduce a selection of concepts in a simplified form that are further described below in the detailed description. This summary is not intended to identify key features or essential features of the claimed subject matter, nor is it intended to be used to limit the scope of the claimed subject matter.

In one aspect, the present disclosure provides a database-based data processing method, including:
receiving a target query statement;
determining a target materialized view for executing the target query statement according to a data query time corresponding to the target query statement and a time granularity of the materialized view in a database, wherein the database is constructed with the materialized view at different time granularities;
rewriting the target query statement according to the time granularity of the target materialized view to obtain a plurality of target sub-query statement, wherein the target sub-query statements include sub-query statements queried based on the target materialized view; and
merging the target sub-query statements, and performing a data query according to a query statement obtained by merging.

In another aspect, the present disclosure provides a database-based data processing device, the device including:
a receiving module, configured to receive a target query statement;
a first determining module, configured to determine a corresponding target materialized view for executing the target query statement according to a data query time corresponding to the target query statement and a time granularity of the materialized view in a database, wherein the database is constructed with the materialized view at different time granularities;
a processing module, configured to rewrite the target query statement according to the time granularity of the target materialized view to obtain a plurality of target sub-query statements, wherein the target sub-query statements include sub-query statements queried based on the target materialized view; and
a query module configured to merge the target sub-query statements and perform a data query according to a query statement obtained by merging.

In another aspect, the present disclosure provides a computer readable medium having stored thereon a computer program which, when executed by a processing device, performs steps of the method of the first aspect.

In another aspect, the present disclosure provides an electronic apparatus, including:
a storage device having a computer program stored thereon;
a processing device configured to execute the computer program in the storage device to implement steps of the method of the first aspect.

Additional features and advantages of the present disclosure will be set forth in the detailed description which follows.

### BRIEF DESCRIPTION OF THE DRAWINGS

The above and other features, advantages, and aspects of embodiments of the present disclosure will become more apparent by referring to the following detailed description when taken in conjunction with the accompanying drawings. Throughout the drawings, the same or similar reference numbers refer to the same or similar elements. It should be understood that the drawings are schematic and that elements and components are not necessarily drawn to scale. In the drawings:
FIG. 1 is a flowchart of a database-based data processing method provided in accordance with one embodiment of the present disclosure;
FIG. 2 is a block diagram of a database-based data processing device provided in accordance with one embodiment of the present disclosure;
FIG. 3 shows a structural schematic diagram of an electronic apparatus adapted for use in implementing embodiments of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but rather are provided for a more complete and thorough understanding of the present disclosure. It should be understood that the drawings and the embodiments of the disclosure are for illustration purposes only and are not intended to limit the scope of the disclosure.

It should be understood that the various steps recited in method embodiments of the present disclosure may be performed in a different order, and/or performed in parallel. Moreover, method embodiments may include additional steps and/or omit performing the illustrated steps. The scope of the present disclosure is not limited in this respect.

The term "including" and variations thereof as used herein is intended to be open-ended, i.e., "including but not limited to". The term "based on" is "based at least in part on". The term "one embodiment" means "at least one embodiment"; the term "another embodiment" means "at least one additional embodiment"; the term "some embodiments" means "at least some embodiments". Relevant definitions for other terms will be given in the following description.

It should be noted that the terms "first", "second", and the like in the present disclosure are only used for distinguishing different devices, modules or units, and are not used for limiting the order or interdependence of the functions performed by the devices, modules or units.

It is noted that references to "a" or "an" in this disclosure are intended to be illustrative rather than limiting, and that those skilled in the art will appreciate that references to "one or more" are intended to be exemplary and not limiting unless the context clearly indicates otherwise.

The names of messages or information exchanged between devices in the embodiments of the present disclosure are for illustrative purposes only, and are not intended to limit the scope of the messages or information.

It is understood that, before the technical solutions disclosed in the embodiments of the present disclosure are used, the user should be informed of the type, the use range, the use scene, etc. of the personal information related to the present disclosure in a proper manner according to the relevant laws and regulations and obtain the authorization of the user.

For example, in response to receiving a user's active request, prompt information is sent to the user to explicitly prompt the user that the requested operation to be performed would require acquisition and use of personal information to the user. Thus, the user can autonomously select whether to provide personal information to software or hardware such as an electronic apparatus, an application program, a server, or a storage medium that performs the operations of the technical solution of the present disclosure, according to the prompt information.

As an alternative but non-limiting implementation manner, in response to receiving an active request from the user, the manner of sending the prompt information to the user may be, for example, a pop-up window manner, and the prompt information may be presented in a text manner in the pop-up window. In addition, a selection control for providing personal information to the electronic device by the user's selection of "agreeing" or "disagreeing" can be carried in the popup.

It is understood that the above notification and user authorization process is only illustrative and is not intended to limit the implementation of the present disclosure, and other ways of satisfying the relevant laws and regulations may be applied to the implementation of the present disclosure.

At the same time, it is understood that the data involved in the present disclosure (including but not limited to the data itself, the acquisition or use of the data) should comply with the requirements of the relevant laws and regulations and related regulations.

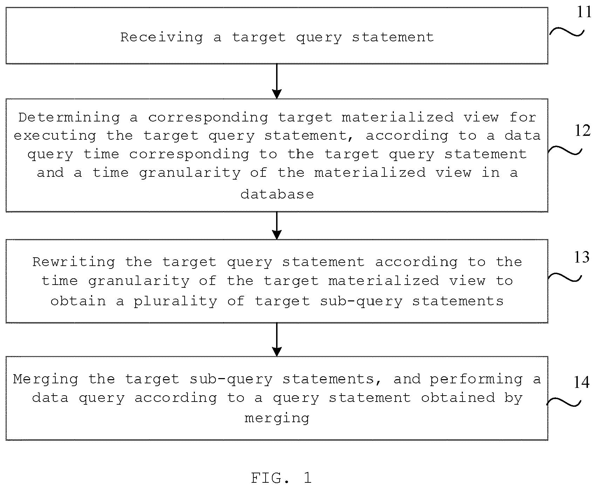

Fig. 1 is a flowchart of a database-based data processing method according to an embodiment of the present disclosure, the method including, as shown in Fig. 1:
in step 11, a target query statement is received.

Wherein, the target query statement may be a query statement input by a user through a visual interface or a configuration interface, such as an SQL (Structured Query Language) statement. For example, the target query statement is as follows:

```
 select a, sum(b)
 from tbl
 where t between '2022-05-01 14: 00:00' and '2022-05-09 00: 12:15'
 group by a;
 /*+ temporal (hour = hour_mv, day = day_mv)*/
```

Wherein, /*+ temporal (hour = hour_mv, day = day_mv)*/ is configured to indicate that the target query statement is a splitable query statement, and indicates materialized views hour_mv and day_mv that may be used to perform the split query. Wherein, the materialized view is constructed in the database in advance, and the specific constructing mode is explained below.

In step 12, a corresponding target materialized view for executing the target query statement is determined according to a data query time corresponding to the target query statement and a time granularity of the materialized view in a database, wherein the database is constructed with the materialized view at different time granularities.

A new field may be defined in a Materialized View (MV), that is, a field is used to indicate a corresponding time granularity of the materialized view, for example, time aggregation may be performed in a unit of day, wherein the time granularity is day; the time aggregation may also be performed in a unit of hour, and the time granularity is hour, which may be preset according to an actual application scene, which is not limited by the present disclosure. Therefore, the materialized view which accords with the data query time can be obtained by matching the data query time corresponding to the target query statement with the time granularity of the materialized view.

Materialized views are one technique in databases. By defining the MV as the query result on a certain base table, the result of the corresponding query can be pre-calculated and stored, thereby reducing repeated calculation and improving a user's query efficiency.

As another example, a user may directly input the SQL statement through the configuration interface, and at the same time, may select the SQL statement in a split button in the configuration interface, and may also display a materialized view at multiple time granularities that has been constructed in the database, so as to be selected by the user. In response to receiving the user's selection, the materialized view selected by the user may be taken as the target materialized view, for example, the user selects hour_mv and day_mv, and "/*+ temporal (hour = hour_mv, day = day mv) */" may be automatically added after the SQL statement to determine the target query statement based on the SQL statement input by the user.

In step 13, the target query statement is rewritten according to the time granularity of the target materialized view to obtain a plurality of target sub-query statements, wherein the target sub-query statements include sub-query statements queried based on the target materialized view.

Wherein, results of the corresponding query can be calculated and saved in advance in the materialized view. Then, in this embodiment, when data query is performed based on the target query statement, query can be performed from the existing materialized views in the database, so that query efficiency can be effectively improved.

In the above example, t is a column representing time, and the time range queried by the target query statement spans 9 days of data in total, so that the data size is large, the processing is slow, and the requirement on query timeliness in a query scene difficult to meet. Then, in this embodiment, the target query statement may be split and rewritten based on the target materialized view at different time granularities such that at least a portion of the target query statement may be queried based on the target materialized view.

In step 14, the target sub-query statements are merged, and data query is performed according to a query statement obtained by merging.

For example, a target sub-query may contain n sub-query statements, such as t1, t2, ... , tn, then, merging can be performed in a manner as below:

```
 select a, sum(s)
 from (
 select * from t1
 union all t2
 ...
 union all tn)
 group by a;
```

In the query statement obtained by merging, at least one of the sub-query statements t1, t2 ..., tn is applied to the pre-aggregated result in the materialized view, and execution efficiency of performing data query according to the query statement obtained by merging is significantly higher than that of performing query based on the target query statement.

Therefore, according to said technical solution, the target query statement can be rewritten based on the materialized view in the database, so that data query can be realized based on the existing materialized view in the database, and efficiency of data query can be effectively improved based on the result aggregated in advance in the materialized view. Meanwhile, the target query statement is split into a plurality of sub-query statements to be rewritten, so that on one hand, the query statement can be automatically rewritten, and rewriting accuracy and uniformity of query statement are ensured, and on the other hand, the materialized view constructed in advance in the database can be adapted for data queries generated by different business requirements. Namely, the data query in a longer time window can be split, and at least one part of the materialized view can be queried based on the result aggregated in advance in the materialized view, so that the data query efficiency is further improved, and the real-time performance of data queries is ensured.

In one possible embodiment, the constructing the materialized view may include:
receiving a query statement for constructing the materialized view.

Wherein, the query statement can be a statement provided by a database related person based on actual application needs and used for constructing the materialized view, and a corresponding materialized view is constructed in the database in advance, so that support is provided for subsequently improving the data query efficiency.

Then, according to the query statement, a type of a table model of the materialized view is determined.

Wherein, the type of the table model of the materialized view may include the following:
Aggregate Table: aggregation type configured to indicate that the table data is aggregated in advance in a storage layer, and then a calculation layer directly processes the aggregated data;
Duplicate table: detail type configured to indicate that the table data is not pre-aggregated in the query process, and all detail data are reserved;
Unique table: unique type configured to indicate that the table data is subjected to deduplication in a storage layer during query, and historical data is replaced by the latest data;
Different operations may exist in the materialized view, and types of materialized view that the query statement can construct are limited. Selection of the type of the table model of the materialized view is critical to performance of the query with respect to the materialized view. For example, a query statement used to construct a materialized view is represented as follows:
   created formatted view test_mv as
   select a, sum (b) from base_table group by a;
wherein, in the related art, the type of the table model of the materialized view and other related physical attributes are usually implemented based on an inherited base table. As the definition of the materialized view requires another base table, the various attributes of the materialized view are also inherited from the base table. For example, the materialized view of Apache Doris is implemented as a schema for the base table, and thus the various attributes (including the table model) of the materialized view are the same as the base table.

In the above example, if the type of the base table is Duplicate table, the constructed materialized view is test_mv, and the result of the materialized view needs to be aggregated on the data of the base_table, it is not necessary to store detailed data in the materialized view here. Then it may be further determined based on embodiments of the present disclosure that the type of the table model of the materialized view is Aggregate table. Duplicate table is selected as the table model relative to the attribute of the inheritance base table, and efficiency of data query based on the materialized view is greatly improved.

Then, the materialized view is constructed according to the query statement and the type of the table model.

Therefore, according to said technical solution, the type of the optimal table model corresponding to the materialized view can be automatically determined based on the query statement for constructing the materialized view, and effective support is provided for data query based on the constructed materialized view.

In one possible embodiment, the determining the type of the table model of the materialized view according to the query statement may include:
determining whether an aggregation function is included in the query statement. Wherein, the aggregation function may be a function containing an Aggregate operation, such as a sum() function, a mean() function, or the like.

If the query statement contains an aggregation function, determining a type of the table model according to a type of a query data table in the query statement and a type of the aggregation function.

Wherein, the type of the query data table may include Aggregate table, Duplicate table, and Unique table. The type of aggregation function is configured to indicate whether the aggregation function is a splitable type or an un-splitable type. Wherein, the splitable aggregation function of the splitable type is a function that can support calculation of an overall aggregation result according to a plurality of partial aggregation results, for example sum, min, max, and the like, the un-splitable aggregation function of the un-splitable type is a function that cannot calculate an overall aggregation result from partial aggregation results, such as median, percentile, and the like.

As an example, the determining the type of the table model according to the type of the query data table in the query statement and the type of the aggregation function includes:
if the type of the query data table is an aggregation type or a detail type and the type of the aggregation function is a splitable type, determining that the type of the table model is an aggregation type; and
if the type of the query data table is an aggregation type or a detail type and the type of the aggregation function is an un-splitable type, determining that the type of the table model is a detail type.

As described in the above example, if the query statement includes aggregation function sum(), the type of base_table is Duplicate table, and the type of aggregation function sum() is a splitable type, it is then determined that the type of the table model is aggregation type, that is, Aggregate table.

If the query statement does not contain an aggregation function and the type of the query data table in the query statement is a detail type, determining that the type of the table model is a detail type.

For example, the type of table model may be determined based on the correspondence as shown in Table 1 below based on the query statement:

**Table 1**

| Does it contain an aggregate function? | Query the type of data table | Type of aggregate function | Type of table model |
|---|---|---|---|
| Not containing an aggregate function | Duplicate | | Duplicate |
| | Aggregate | | Not supported |
| | Unique | | Not supported |
| Containing an aggregate function | Duplicate | splitable | Aggregate |
| | | Un-splitable | Duplicate |
| | Aggregate | splitable | Aggregate |
| | | Un-splitable | Duplicate |
| | Unique | splitable | Not supported |
| | | Un-splitable | Not supported |

Therefore, according to said technical solution, the type of the table model of the materialized view can be automatically and accurately determined, usability of the constructed materialized view is improved, the type is automatically determined in condition that a user does not specify the type of the table model of the materialized view, efficiency of data query based on the materialized view is guaranteed. Meanwhile, errors caused by user specification can be reduced to a determined degree, and at the same time, manual workload is saved.

In one possible embodiment, the constructing the materialized view further includes:
obtaining a specified type of the constructed materialized view.

For example, database related personnel may explicitly specify various attributes of a materialized view when creating the materialized view. Various physical attributes of the materialized view, such as the type of the table model, are specified in the creation statement of the materialized view, for example, in Oracle. Determining whether the specified type is consistent with a type of the table model.

If the specified type input by the user is inconsistent with the type of the table model, outputting prompt information and/or the type of the table model.

A junior user does not know the meaning of various table models, and therefore the selected table model is not necessarily optimal. Taking the above example as an example, if the specified type is Duplicate table, the determined type of the table model is Aggregate table, that is, the two are inconsistent, and here, prompt information may be output to prompt the user that the currently specified type is not the optimal type, and the determined type of the table model may also be output to provide a more accurate and appropriate type of the table model for the user, so as to improve the efficiency of performing data query based on the materialized view, and meanwhile, the problem of incorrect query result caused by incorrect type of the table model of the materialized view may also be avoided, and the accuracy of data query is ensured.

In one possible embodiment, the select statement and the group by statement in the query statement include the time granularity corresponding to the materialized view.

As in the above example, materialized views at equal time granularity in days and in hours may be defined, and data may be aggregated according to time dimensions of days and hours, respectively, wherein the query statement corresponding to the materialized view at the time granularity of day is expressed as follows:
created formatted view day_mv as
select a, to_day(t), sum(b)
from tbl
group by a, to_day(t);

Wherein to_day(t) may represent the time granularity of the materialized view in days.

The query statement corresponding to a materialized view with the time granularity of hour is represented as follows:
created materialized view day_mv as
select a, to_day(t), sum(b)
from tbl
group by a, to_hour(t);

Wherein to_hour(t) may represent the time granularity of the materialized view of hour.

Therefore, according to said technical solution, if the select statement includes the time granularity of the materialized view, the time granularity can be stored in the corresponding materialized view as a result of the time field, so that a value of the time field is matched with a time window in the target query statement, and if the group by statement includes the time granularity of the materialized view, data can be collected according to the time granularity, and a data query scene related to the time window can be further adapted to.

In one possible embodiment, the rewriting the target query statement according to the time granularity of the target materialized view to obtain an exemplary implementation of a plurality of target sub-query statements may include:
sequentially splitting a data query time of the target query statement according to a sequence of time durations from large to small of the time granularity of the target materialized view to obtain a split time window corresponding to the target materialized view at each time granularity.

For example, if the time granularity of the target materialized view is day and hour, the data query time of the target query statement may be split firstly based on the target materialized view with the time granularity of day. Illustratively, the target query statement is as follows:
select a, sum(b)
from tbl
where t between '2022-05-01 14: 00:00' and '2022-05-09 00: 12:15' group by a;

When splitting is performed based on the data query time of the target materialized view with the time granularity of day and hour, boundaries of the time windows of the target materialized view with the time granularity of day are all whole days, and boundaries of the time windows of the materialized view with the time granularity of hour are all whole hours. The target materialized view with the time granularity of day can be split to obtain the time range of 2022-05-02 00:00:00 ~ 2022-05-09 00:00:00, and then, the target materialized view with the time granularity of hour is split to obtain the time range of 2022-05-01 14:00:00 ~ 2022-05-02 00:00:00. Finally, the residue time range is 2022-05-09 00:00:00 ∼ 2022-05-09 00:12:15.

The data query time of the target query may then be split into the following portions:
1. 2022-05-01 14:00:00 ~ 2022-05-02 00:00:00, data analysis in this time range can be supported by a materialized view hour_mv, with time granularity of hour;
2. 2022-05-02 00:00:00 ~ 2022-05-09 00:00:00, data in the time range can be supported by a materialized view day_mv with time granularity of day;
3. 2022-05-09 00:00:00 ~ 2022-05-09 00:12:15, if the time range does not correspond to the time granularity of the target materialized view, the corresponding data is supported by tbl.

Then, rewriting the target query statement according to the target materialized view and the split time window, and taking an obtained sub-query statement which is queried based on the target materialized view as the target sub-query statement;

As indicated above, when constructing a materialized view, one column of fields (e.g., to_day(t) and to_hour(t)) that represent the time granularity of the materialized view is added, so that day_mv and hour_mv are difficult to directly match with the target query statement. Then, in this embodiment, the target query statement can be rewritten so that the portion matching the target materialized view can be queried based on the target materialized view.

Illustratively, taking the rewriting of the sub-query statement queried by the target materialized view with the time granularity of day as an example, where an initial statement corresponding to the target materialized view may be determined based on the split time window:
select a, sum (b)
from tbl
where t between '2022-05-02 00:00:00' and '2022-05-09 00:00:00' group by a.

Then, rewriting the where condition in the initial statement based on the time granularity of the target materialized view to obtain a rewritten statement:
select a, sum(b)
from tbl
where to_day (t) between to_day ('2022-05-02 00:00:00') and to_day ('2022-05-09 00:00:00')
group by a.

Then rewriting is carried out by adding a group by column and adding a sub query, namely rewriting the from statement based on the definition of the target materialized view so as to query from the target materialized view, and further obtaining:
select a, sum(s)
from (
select a, to_day(t) as d, sum(b) as s
from tbl
group by a, to_day(t)
) where d between to_day ('2022-05-02 00:00:00') and to_day ('2022-05-09 00:00:00').

Then a query may be made from day mv based on the above statement, so as to obtain an equivalent query statement, i.e., a sub-query statement that makes a query based on the target materialized view:
select a, sum(s) as s
from day_mv
where d between to_day ('2022-05-02 00:00:00') and to_day ('2022-05-09 00:00:00');

Wherein, the rewriting manner of the sub-query statement queried by the target materialized view with the time granularity of hour is similar to that described above, and is not repeated here.

With respect to a residual time window which does not correspond to the time granularity of the target materialized view in the target query statement, rewriting the target query statement based on the residual time window, and taking a rewritten sub-query statement as the target sub-query statement.

That is, with respect to the time range of 2022-05-09 00:00:00 ~ 2022-05-09 00:12:15, the target query statement may be directly rewritten based on the residual time window as the following:
select a, sum(b)
from tbl
where t between '2022-05-09 00:00:00' and '2022-05-09 00:12:15' group by a;
to directly query the data in the time range from the data query table tbl based on the target sub-query statement.

Therefore, when a data query is performed based on a statement obtained by merging the target sub-query statements, query can be performed from the corresponding materialized view data for each time window, and finally an aggregated query result is obtained. According to said technical solution, the target sub-query statement can be automatically rewritten, so that at least part of query is queried from the materialized view in the database. Query efficiency is effectively improved, while ensuring accuracy of the data query result. Meanwhile, the database-based data processing method can be adapted for query of any time window so as to return a data query result in real time and expand the application scene of the database-based data processing method.

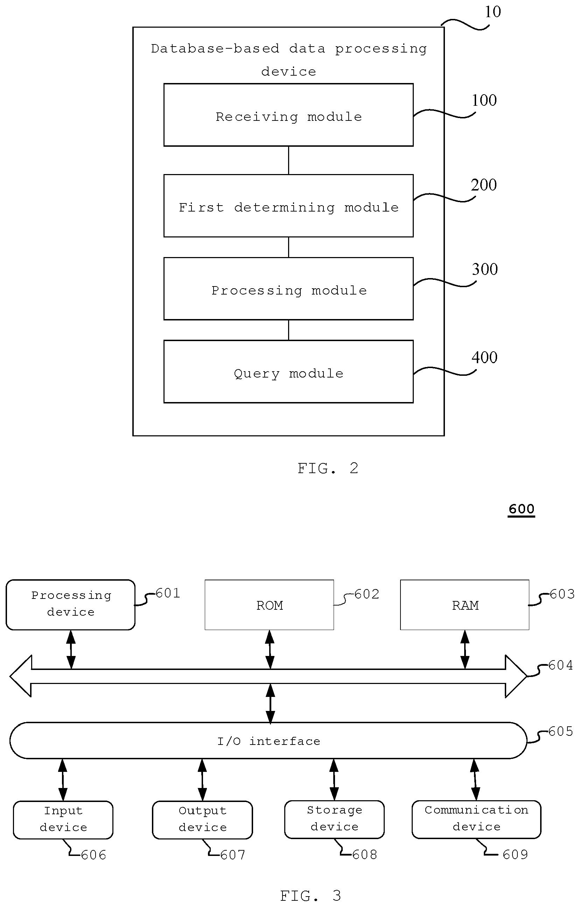

The present disclosure also provides a database-based data processing device, as shown in Fig. 2, the device 10 including:
a receiving module 100, configured to receive a target query statement;
a first determining module 200, configured to determine a corresponding target materialized view for executing the target query statement according to a data query time corresponding to the target query statement and a time granularity of the materialized view in a database, wherein the database is constructed with the materialized view at different time granularities;
a processing module 300, configured to rewrite the target query statement according to the time granularity of the target materialized view to obtain a plurality of target sub-query statements, wherein the target sub-query statements include sub-query statements queried based on the target materialized view; and
a query module 400 configured to merge the target sub-query statements, and perform a data query according to a query statement obtained by merging.

Optionally, constructing a materialized view is determined by a constructing device, the constructing device including:
a statement receiving module configured to receive a query statement for constructing the materialized view;
a second determining module configured to determine a type of a table model of the materialized view according to the query statement; and
a constructing module configured to construct the materialized view according to the query statement and the type of the table model.

Optionally, the second determining module includes:
a first determining sub-module, configured to determine whether the query statement contains an aggregation function;
a second determining sub-module, configured to determine, if the query statement includes an aggregation function, a type of the table model according to a type of a query data table in the query statement and a type of the aggregation function; and
a third determining sub-module configured to determine that the type of the table model is a detail type if the query statement does not contain an aggregation function and the type of the query data table in the query statement is a detail type.

Optionally, the second determining sub-module is further configured to:
determine that the type of the table model is an aggregation type, if the type of the query data table is an aggregation type or a detail type and the type of the aggregation function is a splitable type;
determine that the type of the table model is a detail type, if the type of the query data table is an aggregation type or a detail type and the type of the aggregation function is an un-splitable type.

Optionally, the constructing device further includes:
an obtaining module configured to obtain a specified type of the constructed materialized view;
a third determining module configured to determine whether the specified type is consistent with the type of the table model; and
an output module configured to output prompt information and/or the type of the table model if the specified type is inconsistent with the type of the table model.

Optionally, the select statement and the group by statement in the query statement include time granularities corresponding to the materialized view.

Optionally, the processing module includes:
a splitting sub-module configured to sequentially split a data query time of the target query statement according to a sequence of time durations from large to small of the time granularity of the target materialized view to obtain a split time window corresponding to the target materialized view at each time granularity;
a first processing sub-module configured to rewrite the target query statement according to the target materialized view and the split time window, and taking the obtained sub-query statement which is queried based on the target materialized view as a target sub-query; and
a second processing sub-module configured to rewrite the target query statement based on a residual time window which does not correspond to the time granularity of the target materialized view in the target query statement, and taking the rewritten sub-query statement as the target sub-query statement.

Referring now to Fig. 3, which shows a schematic block diagram of an electronic apparatus (e.g., a terminal apparatus or server) 600 adapted for use in implementing an embodiment of the present disclosure, the terminal apparatus in the embodiment of the present disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic apparatus shown in Fig. 3 is only an example, and should not bring any limitation to functions and scope of use of the embodiment of the present disclosure.

As shown in Fig. 3, the electronic apparatus 600 may include a processing device (e.g., central processor, graphics processor, etc.) 601 that may perform various appropriate actions and processes in accordance with a program stored in a Read Only Memory (ROM) 602 or a program loaded from a storage device 608 into a Random Access Memory (RAM) 603. In the RAM 603, various programs and data necessary for operation of the electronic apparatus 600 are also stored. The processing device 601, the ROM 602, and the RAM 603 are connected to each other via a bus 604. An input/output (I/O) interface 605 is also connected to bus 604.

Generally, the following devices may be connected to the I/O interface 605: input devices 606 including, for example, a touch screen, touch pad, keyboard, mouse, camera, microphone, accelerometer, gyroscope, or the like; output devices 607 including, for example, a Liquid Crystal Display (LCD), a speaker, a vibrator, and the like; a storage device 608 including, for example, magnetic tape, hard disk, or the like; and a communication device 609. The communication device 609 may allow the electronic apparatus 600 to communicate with other devices wirelessly or by wire to exchange data. While Fig. 3 illustrates an electronic apparatus 600 having various devices, it is to be understood that not all illustrated devices are required to be implemented or provided. More or fewer devices may be alternatively implemented or provided.

In particular, the processes described above with reference to the flowchart may be implemented as computer software programs, according to embodiments of the present disclosure. For example, an embodiment of the present disclosure includes a computer program product including a computer program carried on a non-transitory computer readable medium, the computer program containing program code for performing a method illustrated by the flow chart. In such an embodiment, the computer program may be downloaded and installed from a network via the communication device 609, or installed from the storage device 608, or installed from the ROM 602. The computer program, when executed by the processing device 601, performs the above-described function defined in the method of the embodiment of the present disclosure.

It should be noted that the computer readable medium of the present disclosure may be a computer readable signal medium or a computer readable storage medium or any combination of the two. A computer readable storage medium may be, for example, but not limited to, an electronic, magnetic, optical, electromagnetic, infrared, or semiconductor system, device, or apparatus, or any combination of the foregoing. More specific examples of the computer readable storage medium may include, but are not limited to: an electrical connection having one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain, or store a program for use by or in connection with an instruction execution system, device, or apparatus. And in the present disclosure, a computer readable signal medium may include a propagated data signal with computer readable program code embodied therein, for example, in baseband or as part of a carrier wave. Such a propagated data signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, device, or apparatus. Program code embodied on a computer readable medium may be transmitted using any appropriate medium, including but not limited to: an electrical wire, an optical cable, RF (radio frequency), etc., or any suitable combination of the foregoing.

In some embodiments, the clients, servers may communicate using any currently known or future developed network Protocol, such as HTTP (HyperText Transfer Protocol), and may be interconnected with any form or medium of digital data communication (e.g., a communication network). Examples of communication networks include a local area network ("LAN"), a wide area network ("WAN"), the internet (e.g., the Internet), and peer-to-peer networks (e.g., ad hoc peer-to-peer networks), as well as any currently known or future developed networks.

The computer readable medium may be contained in the electronic apparatus; or may be separate and not incorporated into the electronic apparatus.

The computer readable medium carries one or more programs which, when executed by the electronic apparatus, cause the electronic apparatus to: receive a target query statement; determine a corresponding target materialized view for execution of the target query statement according to a data query time corresponding to the target query statement and a time granularity of the materialized view in a database, wherein the database is constructed with the materialized view at different time granularities; rewrite the target query statement according to the time granularity of the target materialized view to obtain a plurality of target sub-query statements, wherein the target sub-query statements include sub-query statements queried based on the target materialized view; and merging the target sub-query statements, and performing data query according to a query statement obtained by merging.

Computer program code for carrying out operations for aspects of the present disclosure may be written in any combination of one or more programming languages, including but not limited to an object-oriented programming language such as Java, Smalltalk, C + +, and further including conventional procedural programming languages, such as the "C" programming language or similar programming languages. The program code may execute entirely on a user's computer, partly on a user's computer, as a stand-alone software package, partly on a user's computer and partly on a remote computer or entirely on a remote computer or server. In the latter scene, the remote computer may be connected to the user' s computer through any type of network, including a Local Area Network (LAN) or a Wide Area Network (WAN), or the connection may be made to an external computer (for example, through the Internet using an Internet service provider).

The flowchart and block diagram in the figures illustrate architecture, functionality, and operation of possible implementations of systems, methods and computer program products according to various embodiments of the present disclosure. In this regard, each block in the flowchart or block diagram may represent a module, segment, or portion of code, which includes one or more executable instructions for implementing specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagram and/or flowchart, and combinations of blocks in the block diagram and/or flowchart, can be implemented by special purpose hardware-based systems that perform specified functions or acts, or combinations of special purpose hardware and computer instructions.

The modules described in the embodiments of the present disclosure may be implemented by software or hardware. Where the name of a module does not in some cases constitute a limitation on the module itself, for example, a receiving module may also be described as a "module that receives a target query statement".

The functions described herein above may be performed, at least in part, by one or more hardware logic components. For example, without limitation, exemplary types of hardware logic components that may be used include: field Programmable Gate Arrays (FPGAs), Application Specific Integrated Circuits (ASICs), Application Specific Standard Products (ASSPs), system on a chip (SOCs), Complex Programmable Logic Devices (CPLDs), and the like.

In the context of the present disclosure, a machine-readable medium may be a tangible medium that can contain, or store a program for use by or in connection with an instruction execution system, device, or apparatus . The machine-readable medium may be a machine-readable signal medium or a machine-readable storage medium. A machine-readable medium may include, but is not limited to, an electronic, magnetic, optical, electromagnetic, infrared, or semiconductor system, device, or apparatus, or any suitable combination of the foregoing. More specific examples of a machine-readable storage medium would include an electrical connection based on one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, Example 1 provides a database-based data processing method, wherein the method includes:
receiving a target query statement;
determining a corresponding target materialized view for executing the target query statement according to a data query time corresponding to the target query statement and a time granularity of the materialized view in a database, wherein the database is constructed with the materialized view at different time granularities;
rewriting the target query statement according to the time granularity of the target materialized view to obtain a plurality of target sub-query statements, wherein the target sub-query statements include sub-query statements queried based on the target materialized view; and
merging the target sub-query statements, and performing a data query according to a query statement obtained by merging.

According to one or more embodiments of the present disclosure, Example 2 provides the method of example 1, wherein constructing of the materialized view includes:
receiving a query statement for constructing the materialized view;
determining a type of a table model of the materialized view according to the query statement; and
constructing the materialized view according to the query statement and the type of the table model.

According to one or more embodiments of the present disclosure, Example 3 provides the method of example 2, wherein the determining the type of the table model of the materialized view according to the query statement includes:
determining whether the query statement contains an aggregation function;
if the query statement contains an aggregation function, determining the type of the table model according to the type of the query data table in the query statement and the type of the aggregation function; and
if the query statement does not contain an aggregation function and the type of the query data table in the query statement is a detail type, determining that the type of the table model is a detail type.

Accordance to one or more embodiments of the present disclosure, Example 4 provides the method of example 3, wherein the determining the type of the table model according to the type of the query data table in the query statement and the type of the aggregation function includes:
if the type of the query data table is an aggregation type or a detail type and the type of the aggregation function is a splitable type, determining that the type of the table model is an aggregation type; and
if the type of the query data table is an aggregation type or a detail type and the type of the aggregation function is an un-splitable type, determining that the type of the table model is a detail type.

According to one or more embodiments of the present disclosure, Example 5 provides the method of example 2, wherein the constructing of the materialized view further includes:
obtaining a specified type of a constructed materialized view;
determining whether the specified type is consistent with a type of the table model; and
if the specified type is inconsistent with the type of the table model, outputting prompt information and/or the type of the table model.

According to one or more embodiments of the present disclosure, Example 6 provides the method of example 2, wherein a select statement and a group by statement in the query statement include a time granularity corresponding to the materialized view.

According to one or more embodiments of the present disclosure, Example 7 provides the method of example 1, wherein the rewriting the target query statement according to the time granularity of the target materialized view to obtain a plurality of target sub-query statements includes:
sequentially splitting a data query time of the target query statement according to a sequence of time durations from large to small of the time granularity of the target materialized view to obtain a split time window corresponding to the target materialized view at each time granularity;
rewriting the target query statement according to the target materialized view and the split time window, and taking an obtained sub-query statement which is queried based on the target materialized view as the target sub-query statement; and
with respect to a residual time window which does not correspond to the time granularity of the target materialized view in the target query statement, rewriting the target query statement based on the residual time window, and taking the rewritten sub-query statement as the target sub-query statement.

According to one or more embodiments of the present disclosure, Example 8 provides a database-based data processing device, wherein the device includes:
a receiving module configured to receive a target query statement;
a first determining module, configured to determine a target materialized view for executing the target query statement according to a data query time corresponding to the target query statement and a time granularity of the materialized view in a database, where the database is constructed with the materialized view at different time granularities;
a processing module, configured to rewrite the target query statement according to the time granularity of the target materialized view to obtain a plurality of target sub-query statements, wherein the target sub-query statements include sub-query statements that are queried based on the target materialized view; and
a query module configured to merge the target sub-query statements and perform a data query according to a query statement obtained by merging.

According to one or more embodiments of the present disclosure, Example 9 provides, a computer-readable medium having a computer program stored thereon, wherein the program, when executed by a processing device, implements steps of the method of any of examples 1-7.

According to one or more embodiments of the present disclosure, Example 10 provides, an electronic apparatus, including:
a storage device having a computer program stored thereon;
a processing device configured to execute the computer program in the storage device to carry out steps of the method of any of examples 1-7.

The foregoing description is only exemplary of the preferred embodiments of the disclosure and is illustrative of the principles of the technology employed. It will be appreciated by those skilled in the art that the scope of the disclosure herein is not limited to the particular combination of features described above, but also encompasses other combinations of features described above or equivalents thereof without departing from the spirit of the disclosure. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in sequential order. Under certain circumstances, multitasking and parallel processing may be advantageous. Likewise, while several specific implementation details are included in the above discussion, these should not be construed as limitations on the scope of the disclosure. Certain features that are described in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are disclosed as exemplary forms of implementing the claims. With regard to the devices in the above embodiment, the specific manner in which each module performs the operation has been described in detail in the embodiment related to the method, and will not be described in detail here.

## Claims

1. A database-based data processing method, **characterized in that** the method comprises:
receiving a target query statement;
determining a corresponding target materialized view for executing the target query statement, according to a data query time corresponding to the target query statement and a time granularity of the materialized view in a database, wherein the database is constructed with the materialized view at different time granularities;
rewriting the target query statement according to the time granularity of the target materialized view to obtain a plurality of target sub-query statements, wherein the target sub-query statements comprise sub-query statements queried based on the target materialized view; and
merging the target sub-query statements, and performing a data query according to a query statement obtained by merging.

2. The method of claim 1, **characterized in that** constructing the materialized view comprises:
receiving a query statement for constructing the materialized view;
determining a type of a table model of the materialized view according to the query statement; and
constructing the materialized view according to the query statement and the type of the table model.

3. The method of claim 2, **characterized in that** the determining the type of the table model of the materialized view according to the query statement comprises:
determining whether the query statement contains an aggregation function;
in response to that the query statement contains an aggregation function, determining a type of a table model according to a type of a query data table in the query statement and a type of the aggregation function; and
in response to that the query does not contain an aggregation function and the type of the query data table in the query statement is a detail type, determining that the type of the table model is a detail type.

4. The method of claim 3, **characterized in that** the determining the type of the table model according to the type of the query data table in the query statement and the type of the aggregation function comprises:
in response to that the type of the query data table is an aggregation type or a detail type and the type of the aggregation function is a splitable type, determining that the type of the table model is an aggregation type; and
in response to that the type of the query data table is an aggregation type or a detail type and the type of the aggregation function is an un-splitable type, determining that the type of the table model is a detail type.

5. The method of claim 2, **characterized in that** constructing the materialized view further comprises:
obtaining a specified type of the constructed materialized view;
determining whether the specified type is consistent with a type of the table model; and
in response to that the specified type is inconsistent with the type of the table model, outputting prompt information and/or the type of the table model.

6. The method of claim 2, **characterized in that** a select statement and a group by statement in the query statement comprises a time granularity corresponding to the materialized view.

7. The method of claim 1, **characterized in that** the rewriting the target query statement to obtain a plurality of target sub-query statements according to the time granularity of the target materialized view comprises :
sequentially splitting a data query time of the target query statement according to a sequence of time durations from large to small of the time granularities of the target materialized view to obtain a split time window corresponding to the target materialized view at each time granularity;
rewriting the target query statement according to the target materialized view and the split time window, and taking an obtained sub-query which is queried based on the target materialized view as the target sub-query; and
with respect to a residual time window which does not correspond to the time granularity of the target materialized view in the target query statement, rewriting the target query statement based on the residual time window, and taking the rewritten sub-query as the target sub-query.

8. A database-based data processing apparatus (10), **characterized in that** the apparatus comprises:
a receiving module (100), configured to receive a target query statement;
a first determining module (200), configured to determine a target materialized view for executing the target query statement according to a data query time corresponding to the target query statement and a time granularity of the materialized view in a database, where the database is constructed with the materialized view at different time granularities;
a processing module (300), configured to rewrite the target query statement according to the time granularity of the target materialized view to obtain a plurality of target sub-query statements, where the target sub-query statements comprises sub-query statements that are queried based on the target materialized view; and
a query module (400), configured to merge the target sub-query statements and performing a data query according to a query statement obtained by merging.

9. A computer-readable medium, on which a computer program is stored, **characterized in that** the computer program, when executed by a processing device, implements steps of the method of any one of claims 1 to 7.

10. An electronic apparatus (600), **characterized by** comprising:
a storage device (608) having a computer program stored thereon;
a processing device (601) for executing the computer program in the storage device to carry out steps of the method according to any one of claims 1 to 7.
